# EUROPÄISCHE PATENTANMELDUNG

(11) **EP 2 913 523 A1**
(43) Veröffentlichungstag der Anmeldung: **02.09.2015**
(21) Anmeldenummer: 14000676.8
(22) Anmeldetag: 26.02.2014
(51) Int. Cl.: F03G 7/10

(54) **Antriebsvorrichtung**

(71) Anmelder: Hertel, Eric Roger, 67661 Kaiserslautern (DE)
(72) Erfinder: Hertel, Eric Roger, 67661 Kaiserslautern (DE)
(74) Vertreter: Patentanwälte Dr. Keller, Schwertfeger

(57) **Zusammenfassung**

Die Erfindung betrifft eine Antriebsvorrichtung umfassend ein Gerüst (12) mit einer drehbar gelagerten, horizontalen Antriebswelle (14), ein als zweiseitigen Hebel (20) ausgebildetes Rotationselement (16; 116a, 116b, 116c) mit einer Stangenkonstruktion (18) und zwei Hohlkörpern (26a, 26b), die jeweils an den äußeren Enden der Stangenkonstruktion (18) angeordnet und befestigt sind, wobei die Antriebswelle (14) die Drehachse des Rotationselements (16; 116a, 116b, 116c) bildet und die Stangenkonstruktion (18) in zwei Hebelarme (22a, 22b) unterteilt, und eine Fluidvorrichtung mit einer Rohrleitung (34), die entlang der Längsachse der Stangenkonstruktion (18) angeordnet ist und an ihren beiden Endabschnitten jeweils in einen der beiden Hohlkörper (26a, 26b) mündet, wobei die beiden Hohlkörper (26a, 26b) und die Rohrleitung (34) ein im Wesentlichen geschlossenes System für ein Fluid ausbilden, zwei stempelartigen Verdrängungskörpern (36a, 36b), die jeweils in einem Hohlkörper (26a, 26b) in Axialrichtung des Hohlkörpers (26a, 26b) verschiebbar gelagert sind, wobei das Volumen des Verdrängungskörpers (36a, 36b) kleiner als das Innenvolumen des Hohlkörpers (26a, 26b) ist.

## Beschreibung

Die vorliegende Erfindung betrifft eine Antriebsvorrichtung sowie ein Verfahren zum Betreiben der Antriebsvorrichtung.

Es gibt eine Vielzahl verschiedener Antriebsvorrichtungen. Antriebsvorrichtungen dienen im Allgemeinen dazu, eine Maschine mittels Energieumformung zu bewegen oder einen Generator zur Stromerzeugung anzutreiben.

Bei vielen Antriebsvorrichtungen werden zur Erzeugung von Energie Brennstoffe benötigt.

Da beim Verbrennen der Brennstoffe unerwünschte Abgase entstehen und insbesondere fossile Brennstoffe nicht unbegrenzt zur Verfügung stehen, ist der Bedarf nach alternativen Antrieben groß, die umweltfreundlich und ohne Verbrauch von Brennstoffen arbeiten.

Inzwischen werden bekanntermaßen alternative Antriebe angeboten und eingesetzt, bei denen keine Brennstoffe benötigt werden, wie etwa Solarantriebe, Windkraftantriebe oder Wasserkraftantriebe in Form von Gezeitenkraftwerken.

Diese genannten Alternativen zur Erzeugung von Energie haben jedoch den Nachteil, dass sie von bestimmten äußeren Parametern abhängig sind.

So kann ein Solarantrieb beispielsweise nur tagsüber verwendet werden. Windkraftantriebe liefern nur dann Energie, wenn Wind herrscht und Gezeitenkraftwerke müssen sich an die Gezeiten anpassen.

Es ist daher Aufgabe der vorliegenden Erfindung einen umweltfreundlichen Antrieb, d.h. einen Antrieb ohne Verwendung von Brennstoffen, bereit zu stellen, der standort- und zeitunabhängig eingesetzt werden kann.

Erfindungsgemäß wird die Aufgabe durch die Antriebsvorrichtung gemäß dem Gegenstand des Anspruchs 1 gelöst.

Bei der erfindungsgemäßen Antriebsvorrichtung ist eine Antriebswelle mit einem Rotationselement verbunden, wobei das Rotationselement wiederum mit einer Fluidvorrichtung ausgestattet ist.

Unter Fluidvorrichtung wird im Rahmen der Erfindung eine Vorrichtung verstanden, bei der mechanische Bauteile in einem im Wesentlichen geschlossenen System, d.h.in einem im Wesentlichen fluiddichten System, mittels eines Fluids wie Flüssigkeit und/oder Gas betätigt werden.

Die Erfindung verwendet zur Erzeugung einer Drehbewegung der Antriebswelle die im Rotationselement eingebrachte potentielle Energie.

Im Detail wird hierzu ein drehbar gelagerter zweiseitiger Hebel des Rotationselements mit zwei im Wesentlichen gleich langen Hebelarmen in eine vertikale Position gebracht. An den Enden der Hebelarme des Hebels sind jeweils vorzugsweise im Wesentlichen identisch aufgebaute Hohlkörper befestigt. Hierbei befindet sich in dem oberen Hohlkörper ein Fluid, während im dem unteren Hohlkörper kein Fluid enthalten ist. Hierdurch weist der obere Hohlkörper eine größere Masse auf als der untere Hohlkörper. Wird der Hebel nun aus seiner vertikalen Position ausgelenkt, bewirkt die unterschiedliche Gewichtsverteilung in den beiden Hohlkörpern, dass sich der Hebel dreht. Bei einem ausreichenden Massenunterschied zwischen den beiden Hohlkörpern und einer ausreichenden Auslenkung des Hebels führt dies dazu, dass der mit Fluid gefüllte Hohlkörper nach unten schwingt und der Hohlkörper ohne Fluid nach oben geschwenkt wird. Die in dem oberen, mit Fluid gefüllten Hohlkörper gespeicherte potentielle Energie, die nicht für die Rotationsbewegung verbraucht wird, kann beispielsweise zum Antreiben einer Maschine genutzt werden, die über die drehbar gelagerte horizontale Antriebswelle mit dem zweiseitigen Hebel verbunden ist.

Die Fluidvorrichtung ist vorgesehen, um den Antrieb nach dem Rotationsvorgang wieder zu aktivieren, d.h. in den Ausgangszustand zu überführen, in dem der mit Fluid gefüllte Hohlkörper sich in der oberen Position befindet.

Bei einer bevorzugten Ausführungsform sind die beiden Verdrängungskörper und die Rohrleitung starr miteinander verbunden und bilden einen Hydrostempel aus, wobei der Hydrostempel verschiebbar in dem Rotationselement gelagert ist.

Befinden sich nach der Drehung des Rotationselements wieder beide Hohlkörper vertikal übereinander, drückt der Verdrängungskörper im unteren Hohlkörper bzw. der Hydrostempel aufgrund der Schwerkraft auf das Fluid im unteren Hohlkörper, so dass das Fluid in den oberen Hohlkörper gedrückt wird.

Sobald sich das Fluid wieder im Wesentlichen vollständig in dem oberen Hohlkörper befindet, kann der Bewegungsablauf wieder von vorne beginnen.

Hierbei ist es bevorzugt, dass die Fluidmenge so bemessen ist, dass, wenn in jedem Hohlkörper die Verdrängungskörper angeordnet sind, einer der beiden Hohlkörper und die Rohrleitung vollständig mit dem Fluid gefüllt sind, während der andere der beiden Hohlkörper kein Fluid enthält. Auf diese Weise lässt sich eine sehr gute Gewichtsverteilung in dem Rotationselement herstellen. Mit anderen Worten wird hierdurch eine möglichst große Gewichtsdifferenz zwischen den beiden Hohlkörpern in einer Grundposition, in der sich der mit Fluid gefüllte Hohlkörper in der oberen Position befindet, bewirkt.

Bei einer bevorzugten Ausführungsform ist eine Brems- und/oder Stoppvorrichtung für das Rotationselement vorgesehen. Zusätzlich kann eine Rücklaufstoppvorrichtung vorgesehen sein. Dies hat den Vorteil, dass das Rotationselement ausgehend von einer Grundposition, in der sich der mit Fluid gefüllte Hohlkörper in der oberen Position befindet, in einer Zwischenposition, in der sich der mit Fluid gefüllte Hohlkörper in der unteren Position befindet, gestoppt wird, ohne dass eine unerwünschte Pendelbewegung oder Umkehrbewegung des Rotationselements auftritt.

Weiterhin ist es von Vorteil, dass eine Auslenkvorrichtung vorgesehen ist. Die Auslenkvorrichtung bewirkt, dass das Rotationselement automatisch, d.h. ohne äußere Einflüsse aus einer Grundposition, in der sich der mit Fluid gefüllte Hohlkörper in der oberen Position befindet, ausgelenkt wird, sodass eine Drehbewegung des Rotationselements in die vorgesehene Richtung gestartet wird.

Es ist bevorzugt, dass die Auslenkvorrichtung einen Auslöse-/Blockiermechanismus umfasst.

Bei einer vorteilhaften Weiterbildung der Antriebsvorrichtung ist der Hydrostempel mittels des Auslöse-/Blockiermechanismus steuerbar. Hierdurch kann gewährleistet werden, dass die Drehbewegung erst gestartet wird, wenn sichergestellt ist, dass sich das Rotationselement in der Grundposition befindet.

Das Zusammenspiel der Brems-/und oder Stoppvorrichtung, der Auslenkvorrichtung und des Auslöse-/Blockiermechanismus bewirkt somit den richtigen Funktion- und Zeitablauf der Antriebsvorrichtung.

Um einen möglichst effektiven Antrieb zu erhalten, muss die Fluidvorrichtung, welche das Fluid enthält, möglichst reibungsarm arbeiten, was bedeutet, dass die Verdrängungskörper im jeweiligen Hohlkörper und gegebenenfalls das starre Rohr bzw. der Hydrostempel möglichst reibungsarm gleiten. Darüber hinaus muss die Fluidvorrichtung auch möglichst fluiddicht sein, damit kein Fluid verloren geht.

Gemäß einer bevorzugten Ausführungsform ist es daher von Vorteil, dass jeder Verdrängungskörper im Wesentlichen gleitdichtend mit der Seitenwand des Hohlkörpers abschließt.

Bei einer zusätzlichen oder alternativen Ausführungsform, bei der die starre Rohrleitung mit den Verdrängungskörpern verbunden ist, ist es von Vorteil, dass die Rohrleitung über Führungsbuchsen in der Stangenkonstruktion gleitend gelagert ist.

Es hat sich darüber hinaus herausgestellt, dass es von Vorteil ist, dass der Hohlkörper ein Hohlzylinder ist, wobei die Höhe im Inneren des Zylinders gleich oder kleiner dem Durchmesser des Hohlzylinders ist. Somit kann der Verdrängungskörper möglichst reibungsarm im Hohlkörper verschoben werden.

Weiterhin hat es sich als besonders vorteilhaft erwiesen, dass der Verdrängungskörper ebenfalls als Zylinder ausgebildet ist, wobei das Volumen des Verdrängungskörpers in etwa die Hälfte des Innenvolumens des Hohlzylinders ausmacht.

Es ist vorteilhaft, dass jeder Hohlkörper eine Belüftungsvorrichtung und/oder eine Befüllungsvorrichtung für das Fluid aufweist.

Bei einer bevorzugten Ausführungsform ist das Rotationselement lösbar mit der Antriebswelle verbunden.

Bei einer bevorzugten Weiterbildung sind wenigstens zwei Rotationselemente vorgesehen, die an der Antriebswelle lösbar angekoppelt sind.

Gegenstand der vorliegenden Erfindung ist auch ein Verfahren zum Betreiben einer erfindungsgemäßen Antriebsvorrichtung.

Eine bevorzugte Ausführungsform der Erfindung wird anhand der beigefügten Zeichnungen näher erläutert, in denen zeigen:
- Figur 1: eine perspektivische Ansicht der Antriebsvorrichtung;
- Figur 2: einen Querschnitt durch das Rotationselement;
- Figur 3: einen Hydrostempel;

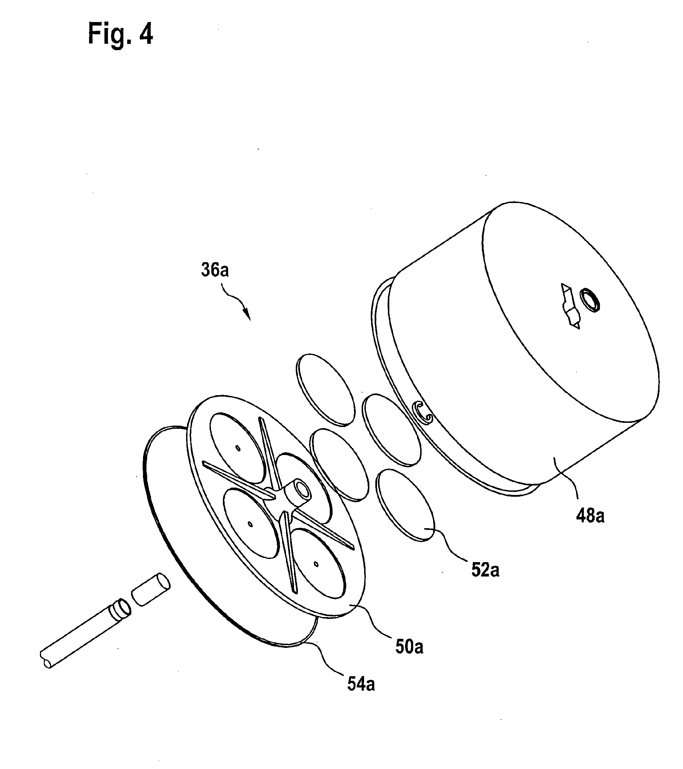

- Figur 4: einen Verdrängungskörper in zerlegter Darstellung;
- Figur 5: eine perspektivische Ansicht einer Auslenkvorrichtung;
- Figur 6: eine Seitenansicht der Auslenkvorrichtung;
- Figur 7: einen vergrößerten Ausschnitt des in Figur 2 dargestellten Teilquerschnitts durch das Rotationselement;
- Figur 8: einen Teil einer Brems- und/oder Stoppvorrichtung;

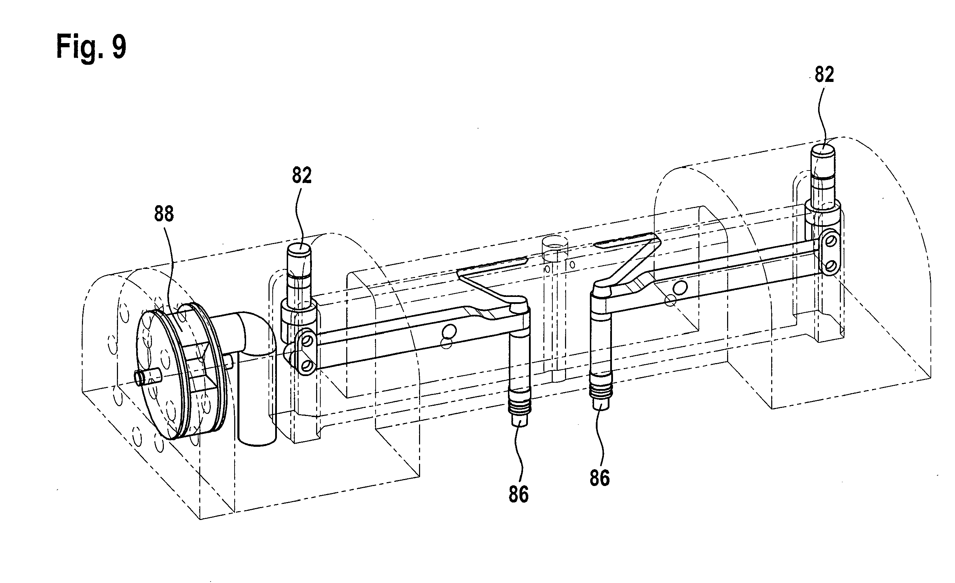

- Figur 9: einen Teil einer Brems- und/oder Stoppvorrichtung in teilweise zerlegter Darstellung; und
- Figur 10: eine Gruppe von Rotationselementen.

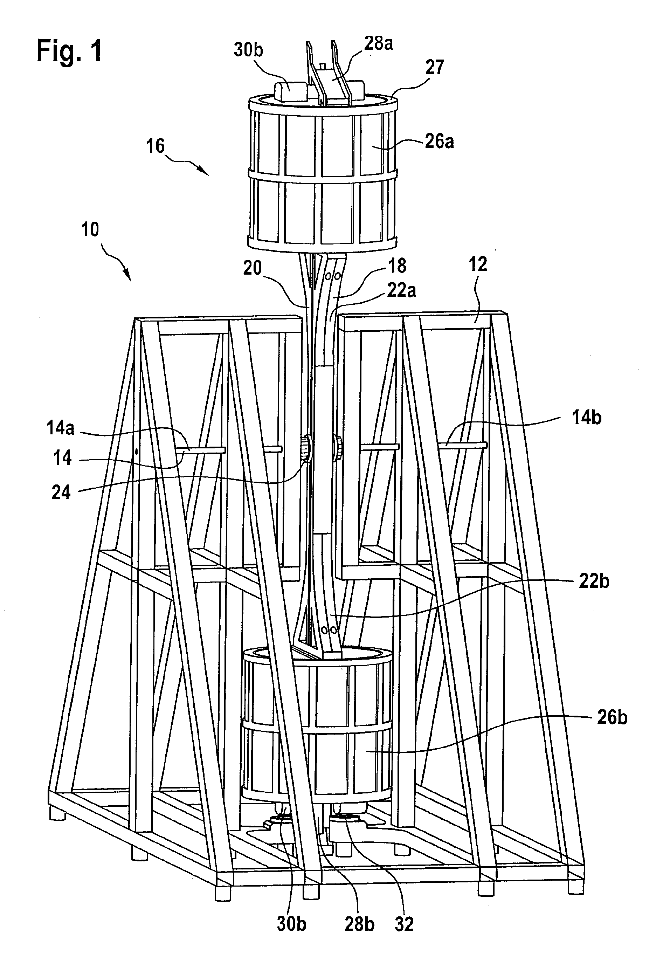

Figur 1 zeigt eine perspektivische Ansicht einer Antriebsvorrichtung 10. Die Antriebsvorrichtung 10 umfasst ein Gerüst 12, mit einer drehbar gelagerten horizontalen Welle 14 und einem senkrecht zur Welle 14 ausgerichteten Rotationselement 16.

Das Rotationselement 16 ist als zweiseitiger Hebel 20 ausgebildet und umfasst eine Stangenkonstruktion 18, an deren mittlerem Abschnitt, senkrecht zu der Stangenkonstruktion die Welle 14 angeordnet ist, so dass die Welle 14 die Drehachse des Rotationselements 16 bildet und die Stangenkonstruktion in zwei Hebelarme 22a, 22b teilt, wobei sich die Hebelarme 22a, 22b jeweils von der Welle 14 nach außen erstrecken.

Die Welle 14 umfasst zwei Wellenabschnitte 14a, 14b, die beidseitig des Rotationselements 16 angeordnet und lösbar mit dem Rotationselement 16 verbunden sind. Für die lösbare Verbindung des Rotationselements 16 mit der Welle 14 ist eine Ankoppeleinheit 24 beispielsweise bestehend aus Flanschen, Kupplung und Rücklaufstopp vorgesehen.

Die dem Rotationselement 16 entfernt liegenden Enden der beiden Wellenabschnitte 14a, 14b können mit entsprechenden Arbeitsmaschinen wie etwa Pumpen oder Generatoren verbunden werden.

Weiter umfasst das Rotationselement 16 zwei Hohlkörper 26a und 26b, die jeweils an den äußeren Enden der Hebelarme 22a, 22b angeordnet und befestigt sind. Die beiden Hebelarme 22a, 22b sind im Wesentlichen gleich lang, so dass die beiden Hohlkörper 26a und 26b in etwa im gleichen Abstand von der Welle 14 angeordnet sind. Die beiden Hohlkörper 26a, 26b weisen in etwa die gleiche Masse auf.

Die Hohlkörper 26a, 26b sind jeweils zylindrisch ausgebildet. Die Längsachsen der Hohlkörper 26a und 26b bilden eine Verlängerung der durch die Stangenkonstruktion 18 hindurchgehenden Achse.

Die Hohlkörper 26a, 26b können zum Zwecke der Montage jeweils an der Ober- und/oder Unterseite einen Deckel aufweisen.

An der axial nach außen weisenden Seite 27 des Hohlkörpers 26a, 26b ist jeweils eine Auslenkvorrichtung 28a, 28b sowie eine Steuervorrichtung 30a, 30b zum Arretieren und Lösen des Rotationselements 16 vorgesehen. Die Steuervorrichtungen 30a, 30b zum Arretieren und Lösen des Rotationselements 16 bilden einen Teil einer Brems- und/oder Stoppvorrichtung für das Rotationselement 16.

Die beiden Hohlkörper 26a, 26b sowie die jeweiligen Auslenkvorrichtungen 28a, 28b und Steuervorrichtungen 30a, 30b zum Arretieren und Lösen des Rotationselements 16 sind baugleich ausgebildet, wobei die Steuervorrichtungen 30a, 30b zum Arretieren und Lösen des Rotationselements 16 jeweils im Wesentlichen mittig auf der jeweils axial nach außen weisenden Seite 27 des Hohlkörpers 26a, 26b befestigt sind.

Im Gerüst 12 sind im Bodenbereich Rastelemente 32 der Brems- und/oder Stoppvorrichtung für das Rotationselement 16 vorgesehen.

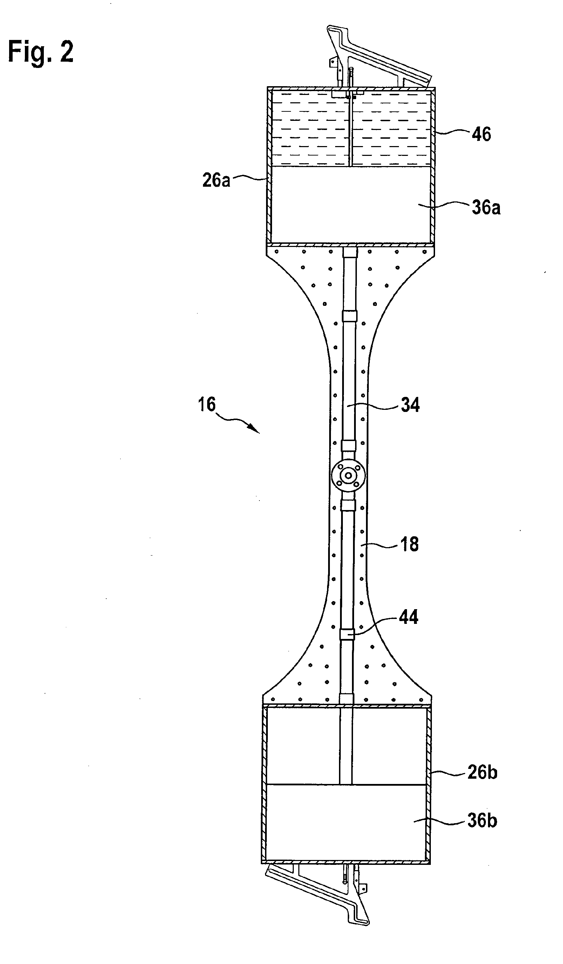

Figur 2 zeigt einen Querschnitt durch das Rotationselement 16.

Die beiden Hohlkörper 26a und 26b sind über eine Rohrleitung 34, die entlang der Längsachse des Stangenelements 18 angeordnet ist, verbunden.

Die beiden Hohlkörper 26a und 26b sowie die Rohrleitung 34 bilden im Wesentlichen ein geschlossenes System für ein Fluid. Vorzugsweise handelt es sich bei dem Fluid um Wasser. Es ist aber auch der Einsatz von Ölen und/oder Gasen möglich.

Gegebenenfalls können dem Fluid Zusatzstoffe beigegeben werden, wie etwa Frostschutzmittel, Reinigungsmittel und/oder Gleitmittel, die die Oberflächenspannung des Fluids verändern oder zur Desinfektion beitragen.

In jedem Hohlkörper 26a, 26b ist jeweils ein stempelartiger, zylindrischer Verdrängungskörper 36a, 36b angeordnet, der in dem Hohlkörper 26a, 26b in Axialrichtung des Hohlkörpers 26a, 26b verschiebbar gelagert ist.

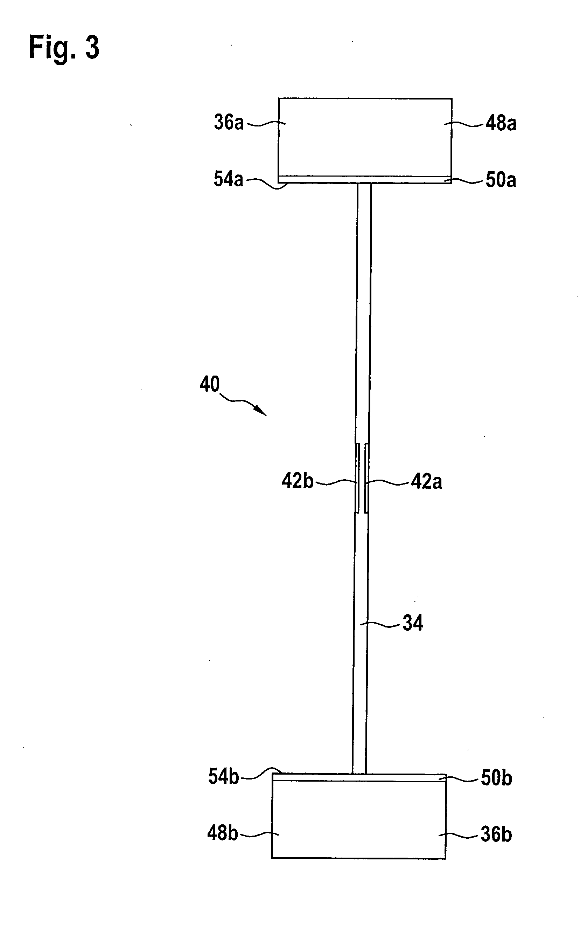

Die beiden Verdrängungskörper 36a, 36b und die starre Rohrleitung 34 bilden einen Hydrostempel 40, wobei die beiden Verdrängungskörper 36a, 36b jeweils an den Endabschnitten der Rohrleitung 34 angeordnet und mit dieser verbunden sind (siehe Figur 3).

Die starr ausgebildete Rohrleitung 34 weist Führungsschlitze 42a, 42b auf, in die Nocken an den Stirnflächen der beiden Wellenabschnitte 14a, 14b eingreifen (siehe Figur 3). Hierdurch wird ein Verdrehen (Torsion) des Hydrostempels 40 verhindert. Weiterhin sind zur Führung der Rohrleitung 34 Gleitlager 44 für ein reibungsarmes Gleiten in der Stangenkonstruktion 18 vorgesehen.

In jedem Verdrängungskörper 36a, 36b ist in der Verlängerung der Rohrleitung 34 ein Kanal vorgesehen, um durch den Hydrostempel 40 hindurch eine Fluidverbindung zwischen den beiden Hohlkörpern 26a, 26b herzustellen.

Bei der dargestellten Ausführungsform ist die Rohrleitung 34 im Kanal der Verdrängungskörper 36a, 36b angeordnet, wobei die Rohrleitung 34 im Rahmen der Erfindung nicht zwingend durch den Verdrängungskörper hindurchgeführt werden muss, sondern auch eine Verlängerung der Rohrleitung darstellen kann.

Der Kanal der Verdrängungskörper 36a, 36b weist eine Öffnung 40 auf, die in den jeweiligen Hohlkörper 26a, 26b mündet.

Figur 2 zeigt die Antriebsvorrichtung 10 in einer Grundposition, in der sich der mit Fluid gefüllte Hohlkörper 26a in der oberen Position befindet. Die Verdrängungskörper 36a, 36b ruhen jeweils im unteren Abschnitt des Hohlkörpers 26a bzw. 26b.

Das Volumen des im Hohlkörper 26a, 26b untergebrachten Teils des Hydrostempels 40, umfassend den Verdrängungskörpers 36a, 36b und einen Abschnitt der Rohrleitung 34, ist kleiner als das Innenvolumen eines Hohlkörpers 26a, 26b. Vorzugsweise füllt der im Hohlkörper 26a, 26 untergebrachte Teil des Hydrostempels, umfassend den Verdrängungskörpers 36a, 36b und einen Abschnitt der Rohrleitung 34, in etwa die Hälfte des Innenvolumens des Hohlkörpers 26a, 26b aus.

Jeder Verdrängungskörper 36a, 36b ist gleitdichtend mit der Seitenwand 46 des Hohlkörpers 26a, 26b ausgerichtet. Weiterhin weist der Verdrängungskörper 36a, 36b etwa die halbe Höhe der Hohlkörper 26a, 26b auf.

Vorzugsweise umfasst jeder Verdrängungskörper 36a, 36b einen zylindrischen Grundkörper 48a, 48b mit einem geringen spezifischen Gewicht und mit flüssigkeitsdichten Hohlräumen, um die Masse des Grundkörpers 48a, 48b gering zu halten. Der Grundkörper 48a, 48b ist mit einer Gewichtsplatte 50a, 50b aus einem Material mit einem hohen spezifischen Gewicht verbunden, beispielsweise einer Metallplatte. Optional können Gewichtsscheiben 52a vorgesehen sein, um das Gewicht der Gewichtsplatte 50a, 50b zu erhöhen.

Vorzugsweise besteht der Grundkörper 48a, 48b aus einem druckfesten Kunststoff und die Gewichtsplatte 50a, 50b aus einer Wolframlegierung.

Darüber hinaus sind Dichtungen 54a, 54b vorgesehen, die gleitdichtend auf die Innenwand 46 der Hohlkörper 26a, 26b wirken.

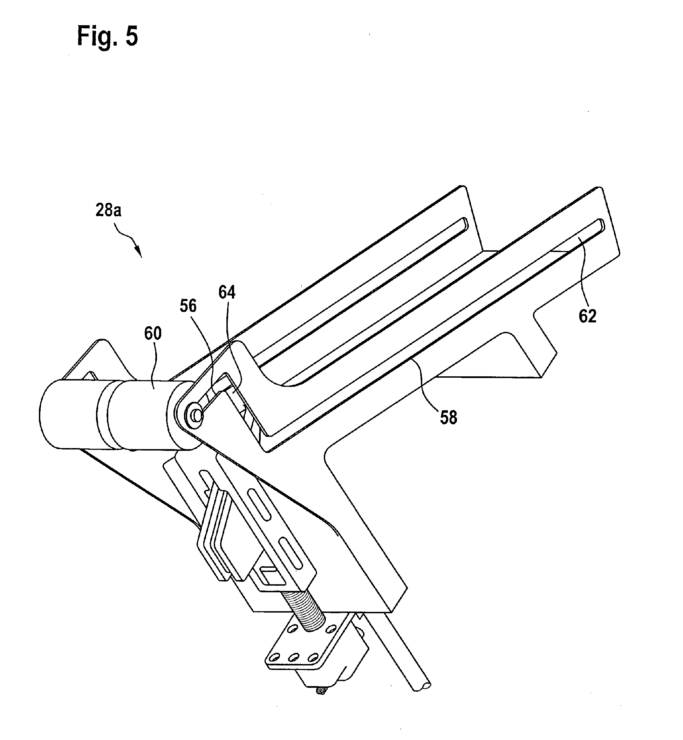

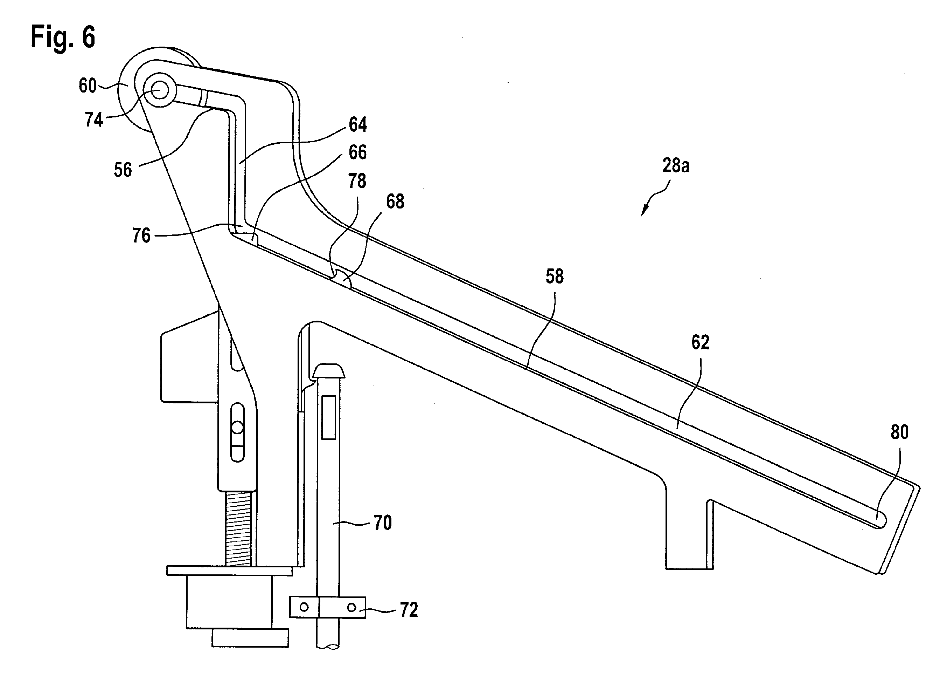

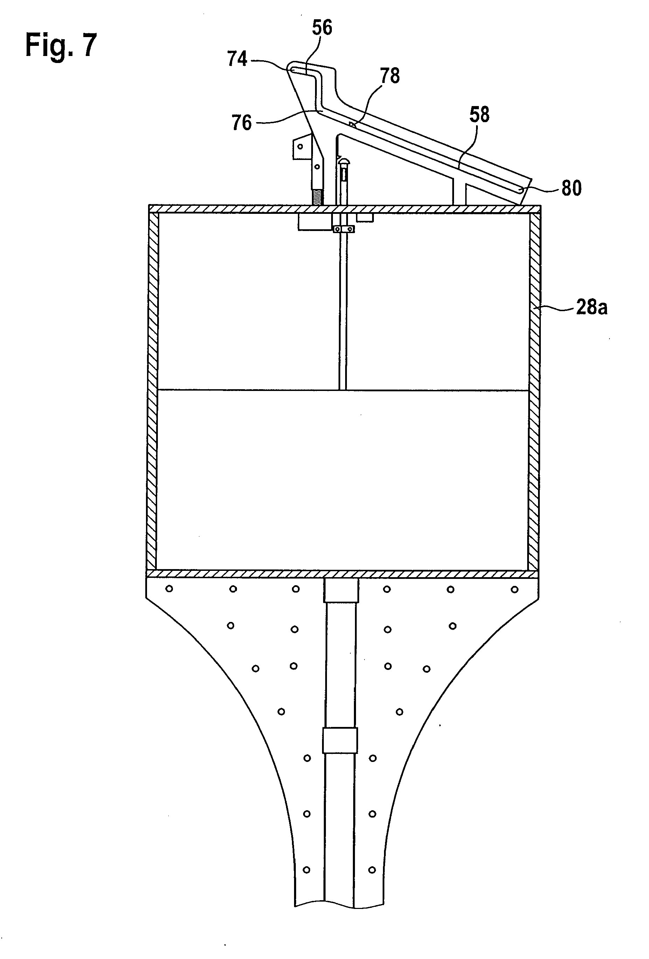

Die Figuren 5 bis 7 zeigen die Auslenkvorrichtung 28a auf dem Hohlkörper 26a im Detail. Die Auslenkvorrichtung 28a weist zwei hintereinander liegende schiefe Ebenen 56, 58 auf, auf der eine Walze 60 entlang gleitet bzw. rollt. Die Bewegung der Walze 60 wird in einer Führungsrille 62 geführt.

Die schiefen Ebenen 56, 58 führen in etwa ausgehend von der Längsachse des Hohlkörpers 26a radial nach außen an die Umfangsseite des Hohlkörpers 26a. Die Führungsrille 62 weist im Bereich der Längsachse des Hohlkörpers 26a eine größeren Abstand vom Hohlkörper 26a auf als am Umfang des Hohlkörpers 26a, wobei zwischen der ersten schiefen Ebene 56 und der zweiten schiefen Ebene 58 ein Sprungabschnitt 64 vorgesehen ist.

Unterhalb des Sprungabschnitts 64 bzw. am oberen Ende der zweiten schiefen Ebene 58 befindet sich ein Auslöse-/Blockiermechanismus 66.

Der Auslöse-/Blockiermechanismus 66 hat die Aufgabe den Hydrostempel 40 während der Drehbewegung des Rotationselements 16 in einer festen Position zu halten.

Im oberen Abschnitt der zweiten schiefen Ebene 58, unterhalb des Auslöse-/Blockiermechanismus 66 ist eine Sperrklinke 68 vorgesehen.

Weiterhin umfasst die Auslenkvorrichtung 28a eine Hubstange 70, die mit einer Mitnehmerklammer 72 ausgestattet ist.

Wenn die Ausführungen auch nur in Bezug auf den Hohlkörper 26a dargestellt sind, gelten diese auch für den Hohlkörper 26b.

Sobald die Antriebsvorrichtung in einer Zwischenposition ist, in der der untere Hohlkörper 26b mit Fluid gefüllt ist, bewegt sich die obere Walze 60, d.h. die Walze auf dem oberen Hohlkörper 26a, auf der ersten schiefen Ebene 56 aus der Ruheposition 74 heraus und rollt in eine erste Zwischenposition 76, in der der Auslöse-/Blockiermechanismus 66 ausgelöst wird.

Das Öffnen des Auslöse-/Blockiermechanismus 66 bewirkt die Freigabe des Hydrostempels 40, so dass der Hydrostempel 40 im unteren Hohlkörper 26b das Fluid verdrängen kann. Die obere Walze 60 rollt mit dem Öffnen des Auslöse-/Blockiermechanismus 66 in eine zweite Zwischenposition 78, in der sie von der Sperrklinke 68 gehalten wird.

Hat sich der Hydrostempel 40 aufgrund der Schwerkraft weitgehend nach unten bewegt und das Fluid aus dem unteren Hohlkörper 26b in den oberen Hohlkörper 26a verdrängt, wirkt der Hydrostempel 40 auf die untere Mitnehmerklammer 72 der Hubstange 70, d.h. auf die Mitnehmerklammer des unteren Hohlkörpers 26b, und zieht die Hubstange 70 nach unten, so dass die Hubstange 70 die obere Sperrklinke 68 herunterzieht und auslöst.

Während die Hubstange 70 in dem oberen Hohlkörper 26a die Sperrklinke 68 löst, wird in analoger Weise im unteren Hohlkörper 26b die entsprechende Sperrklinke wieder in ihre geschlossene Position überführt.

Sobald die Sperrklinke 68 ausgelöst ist, rollt die Walze 60 am Hohlkörper 26a in ihre äußere Auslenkposition 80.

Das Rotationselement 16 wird dadurch aus seiner Gleichgewichtsposition herausgeführt und führt eine Drehbewegung durch, während der die Walze 60 des Hohlkörpers 26a sich in ihrer Auslenkposition 80 befindet.

Während der Drehbewegung kann ein Teil der potentiellen Energie zum Antreiben von Stromgeneratoren oder Antriebsmaschinen beispielsweise Pumpen genutzt werden.

Befindet sich der Hohlkörper 26a nach erfolgter 180° Drehbewegung in seiner unteren Position, bewirkt die Schwerkraft, dass die Walze 60 aufgrund ihres Eigengewichts entlang der Führungsrille 62 in ihre Ruheposition 74 zurückgeführt wird.

Die Walze 60 verbleibt in der Ruheposition 74 solange, bis durch die funktionsrichtige 180° Drehbewegung des Rotationselements 16 der Hohlkörper 26a wieder in der oberen Position steht.

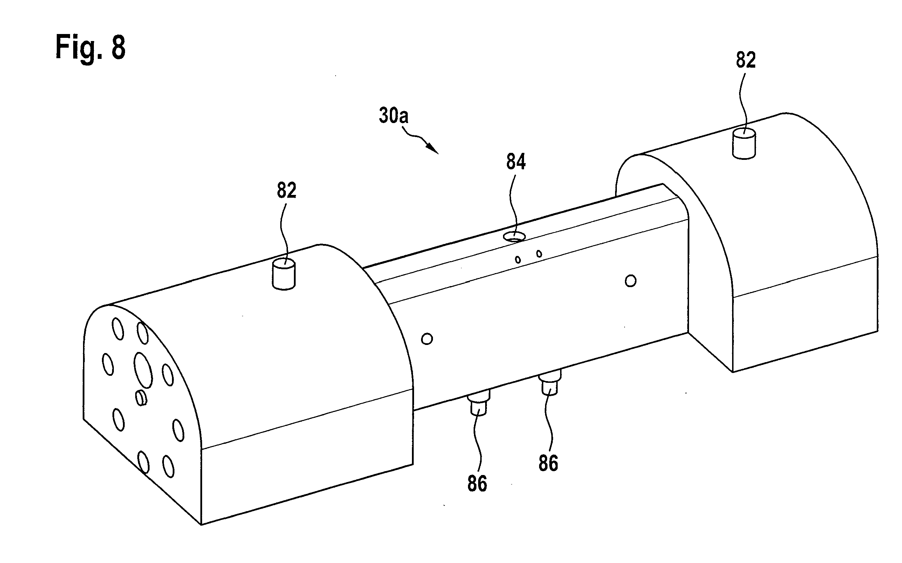

Figur 8 zeigt eine Steuervorrichtung 30a eines Hohlkörpers 26a zum Arretieren und Lösen des Rotationselements 16 im Detail. Die Steuerungsvorrichtung 30a ist an ihrer Unterseite mit der Außenseite des Hohlkörpers 26a verbunden.

Sie weist entsprechende Rastelemente 82 auf, die mit den Rastelementen 32 am Gerüst 12 wechselwirken. Weiterhin ist eine Hubstangenführung 84 für die Hubstange 70 vorgesehen sowie Steuerbolzen 86, die mittels der Rohrleitung 34 betätigt werden.

Das Gehäuse der Steuervorrichtung 30a dient der gleitdichten und verdrehungsfreien (torsionsfreien) Führung der Hubstange 70.

Darüber hinaus umfasst die Steuervorrichtung 30 ein Drehscheibenventil 88 mit unsymmetrischer Gewichtsverteilung, welches mit dem Fluidsystem in Verbindung steht und die Druckverhältnisse in dem Hohlkörper 26a regelt, insbesondere für die Be- und Entlüftung des Hohlkörpers 26a sorgt.

Wenn auch nicht dargestellt, so sind bei den Hohlkörpern 26a, 26b Öffnungen für die Belüftung und für das Befüllen mit dem Fluid vorgesehen. Weitere Öffnungen zum Ausgleich der Druckverhältnisse innerhalb der fluidfreien Bereiche der Hohlkörper können ebenfalls vorgesehen sein.

Die Ausführungen im Zusammenhang mit der Steuervorrichtung 30a gelten auch für die Steuervorrichtung 30b.

Im Grundzustand befindet sich das Rotationselement 16 in vertikaler Position in einer Gleichgewichtsstellung. Der obere Hohlkörper 26a ist mit Flüssigkeit gefüllt. Die Flüssigkeit befindet sich im Hohlkörper 26a oberhalb des Verdrängungskörpers 36a.

Der abgesenkte Hydrostempel 40 ist mittels Auslösevorrichtung 28a eingerastet und die Verrastung zum Gerüst 12 geöffnet.

In diesem Grundzustand rollt die Walze 60 in ihre Auslenkposition 80, sodass das Gewicht der Auslenkvorrichtung 28a auf dem Hohlkörper 26a nicht mehr im Schwerpunkt, d.h. auf die Längsachse des Hohlkörpers 26a wirkt, und das Rotationselement 16 aus seiner Gleichgewichtsposition gebracht wird.

Dies führt zu einer Rotation des Rotationselements 16 um etwa 180°. Die an dem Gerüst 12 drehbar gelagerte Welle 14 wird bei dieser Drehbewegung mitgedreht und kann wenigstens eine nicht dargestellte Maschine oder wenigstens einen nicht dargestellten Generator antreiben.

Das sich drehende Rotationselement 16 wird mittels der Brems- und/oder Stoppvorrichtung in der Zwischenposition abgebremst. In dieser Zwischenposition befindet sich der mit Fluid gefüllte Hohlkörper 26a in einer unteren Position und der Hohlkörper 26b ohne Fluid in der oberen Position.

In dieser Stellung rollt die Walze 60 in der Auslenkvorrichtung 28a des unteren Hohlkörpers 26a wieder ungehindert in ihre Ruheposition 74 zurück.

Währenddessen bewegt sich wie oben beschrieben die obere Walze 60 in der jetzt oberen Auslenkvorrichtung 26b auf dem oberen Hohlkörper 26b aufgrund der Schwerkraft aus der Ruheposition 74 über die erste schiefe Ebene 56 in die erste Zwischenposition 76 und löst den Auslösemechanismus 66 aus.

Aufgrund des Gewichts des Hydrostempels 40 wird das Fluid, das sich nun unterhalb des Verdrängungskörper 36a im Hohlkörper 26a befindet, durch die Rohrleitung 34 in den oberen Hohlkörper 26b gedrückt und füllt den Hohlraum oberhalb des Verdrängungskörper 36b im oberen Hohlkörper 26b.

Die Verschiebung des Hydrostempels 40 bewirkt wiederum, dass in dem oberen Hohlkörper 26b die Sperrklinke 68 ausgelöst wird und die obere Walze 60 entlang der zweiten schiefen Ebene 58 hinunterläuft, um auf dem oberen Hohlkörper 26b ein Ungleichgewicht zu erzeugen, was wiederum eine Schwenkbewegung des Rotationselements 16 bewirkt.

Das Rotationselement 16 ist wie oben bereits angeführt mittels der Kupplung 24 lösbar an den Wellenabschnitten 14a, 14b befestigt.

Mittels der lösbaren Kupplung 24 kann die Kraftabnahme bzw. der Freilauf eines oder mehrere Rotationselemente 16 entlang der Welle 14 gesteuert werden.

Die einzelnen Rotationselemente 16 werden somit nur bei ihrer Drehung mittels der Kupplung 24 mit der Welle gekoppelt. So können in der Zeit, in der das Fluid von dem unteren Behälter in den oberen Behälter gepresst wird, weitere Rotationselemente dafür sorgen, dass die Welle 14 gedreht wird.

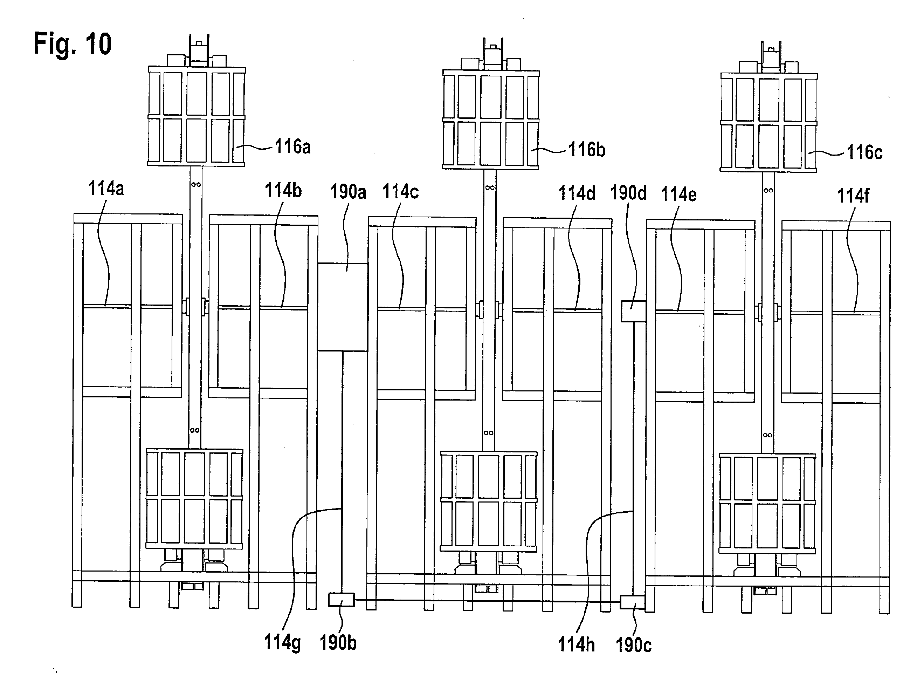

Eine solche Anordnung ist beispielsweise in Figur 10 gezeigt. Die einzelnen Rotationselemente 116a, 116b, 116c sind über eine Vielzahl von Achs- bzw. Wellenabschnitten 114a, 114b, 114c, 114d, 114e, 114f, 114g, 114h; 114i und Getriebeverbindungen 190a, 190b, 190c, 190d miteinander verbunden.

Somit ist bei einer entsprechenden Anzahl von Rotationselementen ein quasi kontinuierlicher Antrieb von Arbeitsmaschinen oder Generatoren möglich.

## Patentansprüche

1. Antriebsvorrichtung umfassend
ein Gerüst (12) mit einer drehbar gelagerten, horizontalen Antriebswelle (14),
ein als zweiseitigen Hebel (20) ausgebildetes Rotationselement (16; 116a,116b,116c)
mit einer Stangenkonstruktion (18) und
zwei Hohlkörpern (26a, 26b), die jeweils an den äußeren Enden der Stangenkonstruktion (18) angeordnet und befestigt sind, wobei die Antriebswelle (14) die Drehachse des Rotationselements (16; 116a, 116b, 116c) bildet und die Stangenkonstruktion (18) in zwei Hebelarme (22a, 22b) unterteilt,
und eine Fluidvorrichtung mit
einer Rohrleitung (34), die entlang der Längsachse der Stangenkonstruktion (18) angeordnet ist und an ihren beiden Endabschnitten jeweils in einen der beiden Hohlkörper (26a, 26b) mündet, wobei die beiden Hohlkörper (26a, 26b) und die Rohrleitung (34) ein im Wesentlichen geschlossenes System für ein Fluid ausbilden,
zwei stempelartigen Verdrängungskörpern (36a, 36b), die jeweils in einem Hohlkörper (26a, 26b) in Axialrichtung des Hohlkörpers (26a, 26b) verschiebbar gelagert sind, wobei das Volumen des Verdrängungskörpers (36a, 36b) kleiner als das Innenvolumen des Hohlkörpers (26a, 26b) ist.

2. Antriebsvorrichtung nach Anspruch 1, **dadurch gekennzeichnet, dass** die beiden Verdrängungskörper (36a, 36b) und die Rohrleitung (34) starr miteinander verbunden sind und einen Hydrostempel (40) ausbilden und der Hydrostempel (40) verschiebbar in dem Rotationselement (16; 116a, 116b, 116c) gelagert ist.

3. Antriebsvorrichtung nach Anspruch 1 oder 2, **dadurch gekennzeichnet, dass** die Fluidmenge so bemessen ist, dass, wenn in jedem Hohlkörper (26a, 26b) die Verdrängungskörper (36a, 36b) angeordnet sind, einer der beiden Hohlkörper (26a, 26b) und die Rohrleitung (34) vollständig mit dem Fluid gefüllt sind und der andere der beiden Hohlkörper (26a, 26b) kein Fluid enthält.

4. Antriebsvorrichtung nach einem der vorhergehenden Ansprüche, **dadurch gekennzeichnet, dass** eine Brems- und/oder Stoppvorrichtung für das Rotationselement (16; 116a, 116b, 116c) vorgesehen ist.

5. Antriebsvorrichtung nach einem der vorhergehenden Ansprüche, **dadurch gekennzeichnet, dass** eine Auslenkvorrichtung (28a, 28b) vorgesehen ist.

6. Antriebsvorrichtung nach Anspruch 5, **dadurch gekennzeichnet, dass** die Auslenkvorrichtung (28a, 28b) einen Auslöse-/Blockiermechanismus (66) umfasst.

7. Antriebsvorrichtung nach einem der Ansprüche 2 bis 6, **dadurch gekennzeichnet, dass** der Hydrostempel (40) mittels der Auslöse-/Blockiermechanismus (66) steuerbar ist.

8. Antriebsvorrichtung nach einem der vorhergehenden Ansprüche, **dadurch gekennzeichnet, dass** jeder Verdrängungskörper (36a, 36b) gleitdichtend mit der Seitenwand (46) des Hohlkörpers (26a, 26b) abschließt.

9. Antriebsvorrichtung nach einem der vorhergehenden Ansprüche, **dadurch gekennzeichnet, dass** die Rohrleitung (34) starr ausgebildet ist und Führungsschlitze (42a, 42b) aufweist, in die Nocken an den Stirnflächen der Wellen (14) eingreifen.

10. Antriebsvorrichtung nach einem der vorhergehenden Ansprüche, **dadurch gekennzeichnet, dass** der Hohlkörper (26a, 26b) ein Hohlzylinder ist, wobei die Höhe im Inneren des Zylinders gleich oder kleiner dem Durchmesser des Hohlzylinders ist und dass der Verdrängungskörper (36a, 36b) als Zylinder ausgebildet ist, wobei das Volumen des Verdrängungskörpers (36a, 36b) in etwa die Hälfte des Innenvolumens des Hohlzylinders ausmacht.

11. Antriebsvorrichtung nach einem der vorhergehenden Ansprüche, **dadurch gekennzeichnet, dass** der Verdrängungskörper (36a, 36b) einen Grundkörper (48a, 48b) aus einem Material mit geringem spezifischen Gewicht und eine Platte (50a, 50b) aus einem Material mit einem hohen spezifischen Gewicht aufweist.

12. Antriebsvorrichtung nach einem der vorhergehenden Ansprüche, **dadurch gekennzeichnet, dass** für jeden Hohlkörper (26a, 26b) eine Belüftungsvorrichtung und/oder eine Befüllungsvorrichtung vorgesehen ist.

13. Antriebsvorrichtung nach einem der vorhergehenden Ansprüche, **dadurch gekennzeichnet, dass** das Rotationselement (16; 116a, 116b, 116c) lösbar mit der Welle (14) verbunden ist.

14. Antriebsvorrichtung nach einem der vorhergehenden Ansprüche, **dadurch gekennzeichnet, dass** wenigstens zwei Rotationselemente (16; 116a, 116b, 116c) an der Welle lösbar angekoppelt sind.

15. Verfahren zum Betreiben einer Antriebsvorrichtung nach einem der Ansprüche 1 bis 14, wobei die Antriebsvorrichtung (10) einen Grundzustand aufweist, in dem das Rotationselement (16; 116a, 116b, 116c) vertikal ausgerichtet ist, die beiden Hohlkörper (26a, 26b) des Rotationselements (16) übereinander stehen und sich Fluid in dem oberen Hohlkörper (26a, 26b) befindet, und einen Zwischenzustand, in dem das Rotationselement (16; 116a,116b,116c) vertikal ausgerichtet ist, die beiden Hohlkörper (26a, 26b) des Rotationselements (16) übereinander stehen und sich Fluid in dem unteren Hohlkörper (26a, 26b) befindet,
**dadurch gekennzeichnet, dass**
das Rotationselement (16; 116a, 116b, 116c) aus seinem Grundzustand ausgelenkt wird,
das Rotationselement (16; 116a, 116b, 116c) in den Zwischenzustand geschwenkt wird, wobei beim Übergang von dem Grundzustand in den Zwischenzustand die Welle (14) in eine Drehbewegung versetzt wird, und beim Übergang vom Zwischenzustand in den Grundzustand der Verdrängungskörper (36a, 36b) des unteren Hohlkörpers (26a, 26b) das Fluid durch die Rohrleitung (34) in den oberen Hohlkörper (26a, 26b) presst.
